Europäisches Patentamt

European Patent Office

Office européen des brevets

(19)

(11) **EP 1 244 201 A1**

(12) **EUROPÄISCHE PATENTANMELDUNG**

(43) Veröffentlichungstag:
25.09.2002 Patentblatt 2002/39

(51) Int Cl.⁷: **H02K 51/00**, B60K 6/04,
B60K 41/00

(21) Anmeldenummer: 01106991.1

(22) Anmeldetag: 21.03.2001

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(71) Anmelder: **Ford Global Technologies, Inc.,
A subsidiary of Ford Motor Company
Dearborn, Michigan 48126 (US)**

(72) Erfinder:
• **Busch, Rainer
52076 Aachen (DE)**

• **Schmitz, Peter
52076 Aachen (DE)**
• **Kok, Daniel Benjamin
6343 CA Klimmen (NL)**

(74) Vertreter: **Drömer, Hans-Carsten, Dipl.-Ing. et al
Ford-Werke Aktiengesellschaft,
Patentabteilung NH/DRP,
Henry-Ford-Strasse 1
50725 Köln (DE)**

(54) **Elekromechanische Kopplungsvorrichtung für die Kraftübertragung im KFZ**

(57)    Die Erfindung betrifft eine elektromechanische Kopplungsvorrichtung (10), welche insbesondere als eine Kombination von Kupplung und Lichtmaschine in einem Kraftfahrzeug verwendet werden kann. Die Kopplungsvorrichtung (10) weist eine Eingangswelle (6) auf, die vom Verbrennungsmotor (11) angetrieben wird und an deren Ende sich eine erste Rotorwicklung (1) befindet. Ferner weist die Vorrichtung eine Ausgangswelle (7) auf, welche ein Getriebe (15) antreibt und an deren Ende sich eine zweite Rotorwicklung (2) befindet. Durch Zufuhr elektrischer Energie zu den Rotorwicklungen (1, 2) kann zwischen diesen ein wählbares Drehmoment erzeugt werden. Die Vorrichtung (10) erlaubt somit eine Drehmomentübertragung zwischen Eingangswelle (6) und Ausgangswelle (7), bei welcher wahlweise elektrische Leistung eingespeist oder entnommen und somit ein Drehzahlunterschied zwischen den Wellen hergestellt werden kann. Vorzugsweise sind Arretiervorrichtungen (4, 21) zur optionalen Kopplung von Eingangswelle und Ausgangswelle miteinander beziehungsweise mit dem Gehäuse vorgesehen.

Fig. 7

EP 1 244 201 A1

**Beschreibung**

Die Erfindung betrifft eine elektromechanische Kopplungsvorrichtung, welche sowohl als Elektromotor als auch als Generator betreibbar ist, enthaltend einen Träger mit Anschlüssen zur Zufuhr elektrischer Energie, eine relativ zum Träger drehbar gelagerte Eingangswelle mit mindestens einer an dieser angeordneten ersten Magnetanordnung, sowie mindestens einer zweiten Magnetanordnung, gegenüber der die Eingangswelle drehbar ist und der zur Erzeugung eines relativen Drehmomentes mit der ersten Magnetanordnung zusammenwirkt, wobei die erste Magnetanordnung und/oder die zweite Magnetanordnung als mit den Anschlüssen verbundener Elektromagnet ausgebildet ist. Ferner betrifft die Erfindung einen insbesondere für ein Kraftfahrzeug geeigneten Kraftantrieb mit einem Verbrennungsmotor.

Eine elektromechanische Kopplungsvorrichtung der eingangs genannten Art findet insbesondere in einem Kraftfahrzeug als Lichtmaschine Verwendung, weshalb die nachfolgende Beschreibung diesen Anwendungsfall zugrunde legt, ohne jedoch hierauf beschränkt zu sein.

Eine Lichtmaschine ist ein elektrischer Generator mit einem als Träger dienenden Gehäuse, welches in der Regel im Motorraum angeordnet ist und das Anschlüsse zur Zufuhr und Entnahme elektrischer Energie aufweist. Eine Lichtmaschine enthält ferner eine Eingangswelle, die mit der Ausgangswelle des Verbrennungsmotors des Kraftfahrzeugs gekoppelt ist, und auf der mindestens eine Spule (Rotorwicklung) angeordnet ist. Wenn elektrischer Strom durch die Spule geleitet wird, wird hierdurch ein entsprechendes Magnetfeld von der Spule erzeugt.

Weiterhin weist eine Lichtmaschine zweite Spulen auf (Statorwicklungen), welche relativ zum Trägergehäuse feststehen. Auch diesen Spulen kann ein Strom zugeführt werden, so dass diese ein Magnetfeld erzeugen. Alternativ zur Rotorwicklung oder zur Statorwicklung können für eine der genannten Wicklungen auch Permanentmagneten verwendet werden.

Die Lichtmaschine kann in bekannter Weise als elektrischer Generator eingesetzt werden, indem der Rotor angetrieben wird und die in der Spule oder den Spulen induzierten elektrischen Ströme abgegriffen werden. Alternativ kann die Lichtmaschine auch als Elektromotor eingesetzt werden, indem durch die Spule oder die Spulen geeignete elektrische Ströme geleitet werden. Als Elektromotor ist die Lichtmaschine insbesondere dazu vorgesehen, den stehenden Verbrennungsmotor zu starten. Bei laufendem Verbrennungsmotor wird die Lichtmaschine bei bekannten Anordnungen dagegen als Generator betrieben, welcher vom Verbrennungsmotor entnommene mechanische Energie in elektrische Energie für die Batterie des Kraftfahrzeugs und die übrigen elektrischen Systeme umwandelt.

Die Lichtmaschine ist in einem Kraftfahrzeug üblicherweise in den Kraftübertragungsweg vom Motor zum Getriebe beziehungsweise zu den Rädern unter Zwischenschaltung mindestens einer Kupplung eingebunden. Die Anordnung dieser Kupplung im Antriebsstrang vor oder hinter der Lichtmaschine weist spezifische Vor- und Nachteile auf: Wenn die Kupplung zwischen der Lichtmaschine und dem Getriebe angeordnet ist, kann die Lichtmaschine nicht optimal für ein generatorisches bzw. regeneratives Bremsen verwendet werden, da der im Leerlauf befindliche Verbrennungsmotor mitbewegt werden muss, was zu hohen Reibungsverlusten führt. Ist die Kupplung dagegen zwischen Lichtmaschine und Motor vorgesehen, so kann der Verbrennungsmotor im ausgekuppelten Zustand nicht die träge Masse der Lichtmaschine zur Speicherung von Rotationsenergie verwenden, was zwecks Einsparung zusätzlicher Schwungmasse wünschenswert ist. Die Anordnung von je einer Kupplung vor und hinter der Lichtmaschine würde zwar grundsätzlich die Verwirklichung beider Ziele erlauben, würde jedoch andererseits zu einem relativ komplexen und teuren mechanischen Aufbau führen.

Vor diesem Hintergrund bestand eine Aufgabe der vorliegenden Erfindung darin, eine elektromechanische Kopplungsvorrichtung für ein Kraftfahrzeug zu schaffen, welche einen energetisch effizienteren Betrieb des Verbrennungsmotors bei gleichzeitig konstruktiv vereinfachtem Aufbau ermöglicht.

Diese Aufgabe wird durch eine elektromechanische Kopplungsvorrichtung mit den Merkmalen des Anspruchs 1 sowie einen Kraftantrieb mit den Merkmalen des Anspruchs 5 gelöst. Vorteilhafte Ausgestaltungen sind in den Unteransprüchen enthalten.

Die elektromechanische Kopplungsvorrichtung, die sich sowohl als Elektromotor als auch als Generator verwenden lässt, enthält einen Träger mit Anschlüssen zur Zufuhr elektrischer Energie. Der Träger kann geometrisch jede geeignete Form und Ausgestaltung annehmen und zum Beispiel als Gehäuse ausgebildet sein. Die Funktion des Trägers besteht darin, andere Bauteile der Vorrichtung zu lagern, sowie die Gesamtvorrichtung selbst an einem Objekt anbringbar zu machen. Insbesondere kann der Träger die Installation der Kopplungsvorrichtung im Motorraum eines Kraftfahrzeugs erlauben. Die Kopplungsvorrichtung enthält ferner eine relativ zum Träger drehbar gelagerte Eingangswelle mit mindestens einer an dieser befestigten Magnetanordnung. Diese Magnetanordnung kann als Elektromagnet ausgebildet sein, welcher elektrisch mit den Anschlüssen am Träger verbunden ist, es kann sich jedoch auch um einen Dauermagneten handeln. Weiterhin enthält die Kopplungsvorrichtung mindestens eine zweite Magnetanordnung, gegenüber welcher die Eingangswelle mit der ersten Magnetanordnung drehbar ist. Die zweite Magnetanordnung und die erste Magnetanordnung wirken über ihre Magnetfelder derart zusammen, dass zwischen ihnen ein relatives Drehmoment erzeugt wird. Die zweite Magnetanordnung kann ebenfalls als Elektromagnet, der elektrisch mit den Anschlüssen des Trägers verbunden ist, oder als Dauermagnet ausgebildet sein. Als weitere Alternative kann die zweite Magnetanordnung einen Eisenkern aufweisen, in den - ähnlich wie bei Asynchronmotoren - durch die erste Magnetanordnung Ströme induziert und so Magnetfelder erzeugt werden. Mindestens eine der Magnetanordnungen ist jedoch als über die genannten Anschlüsse mit Strom versorgbarer Elektromagnet ausgebildet. Die elektromechanische Kopplungsvorrichtung ist dadurch gekennzeichnet, dass die zweite Magnetanordnung an einer relativ zum Träger drehbar gelagerten Ausgangswelle befestigt ist.

Bei bekannten elektromechanischen Kopplungsvorrichtungen - wie zum Beispiel der eingangs genannten Lichtmaschine eines Kraftfahrzeugs - ist die zweite Magnetanordnung stets im Verhältnis zum Träger der Vorrichtung feststehend, weshalb diese auch als "Stator" bezeichnet wird. Drehbar ist allein die Eingangswelle mit den daran befestigten Rotorwicklungen. Bei der erfindungsgemäßen Kopplungsvorrichtung ist dagegen auch die zweite Magnetanordnung relativ zum Träger drehbar gelagert, wobei die zweite Magnetanordnung auf einer Ausgangswelle befestigt ist. Die Vorrichtung hat somit einen funktional symmetrischen Aufbau aus Eingangswelle mit daran befestigter erster Magnetanordnung und Ausgangswelle mit daran befestigter zweiter Magnetanordnung sowie einem Träger, wobei Eingangswelle und Ausgangswelle unabhängig voneinander drehbar am Träger gelagert sind.

Bei dieser "Doppelrotor"-Anordnung können sich somit Eingangswelle und Ausgangswelle unabhängig voneinander drehen, wobei die Drehmomentkopplung zwischen den beiden Wellen über die Magnetanordnungen in steuerbarer Weise stattfindet. Eine derartige Kopplungsvorrichtung lässt sich, wie aus den nachfolgend erläuterten Ausgestaltungen ersichtlich wird, in vorteilhafter Weise insbesondere in einem Kraftfahrzeug verwenden.

Gemäß einer ersten bevorzugten Ausgestaltung der Kopplungsvorrichtung weisen sowohl die erste Magnetanordnung als auch die zweite Magnetanordnung einen Elektromagneten auf, wobei beide Elektromagnete jeweils mit entsprechenden Anschlüssen am Träger verbunden sind. Da beide Elektromagneten unabhängig voneinander relativ zum Träger drehbar sind, müssen für ihren Anschluss entsprechende elektrische Kontakte vorgesehen sein, welche trotz der Drehung zwischen Elektromagnet und Träger eine Übertragung der elektrischen Energie ermöglichen. Dabei kann es sich insbesondere um elektrische Schleifkontakte handeln.

Gemäß einer anderen Weiterbildung der Kopplungsvorrichtung kann eine Arretiervorrichtung vorgesehen sein, mit welcher eine mechanische Kopplung zwischen der Eingangswelle und der Ausgangswelle hergestellt werden kann. Die Arretiervorrichtung kann betätigt werden, wenn eine direkte Verbindung zwischen Eingangswelle und Ausgangswelle ohne die elektromechanische Kopplung über die Magnetanordnungen erwünscht ist.

Ferner kann eine Arretiervorrichtung vorgesehen sein, mit welcher die Eingangswelle mit dem Träger gekoppelt werden kann, oder es kann eine Arretiervorrichtung vorgesehen sein, mit welcher die Ausgangswelle mit dem Träger gekoppelt werden kann. Durch eine solche Arretiervorrichtung kann somit die erste Magnetanordnung und/oder die zweite Magnetanordnung zu einem Stator gemacht werden, so dass sich die Kopplungsvorrichtung ähnlich wie ein Elektromotor oder Generator bekannter Bauart verhält.

Die Erfindung betrifft weiterhin einen Kraftantrieb enthaltend einen Verbrennungsmotor, wobei der Kraftantrieb insbesondere in einem Kraftfahrzeug vorgesehen sein kann. Andere mögliche Anwendungsfälle des Kraftantriebes sind der Antrieb von Schiffen, Werkzeugen oder dergleichen. Der Kraftantrieb ist dadurch gekennzeichnet, dass die Ausgangswelle des Verbrennungsmotors mit der Eingangswelle einer elektromechanischen Kopplungsvorrichtung der vorstehend erläuterten Art verbunden ist.

Bei einem derartigen Kraftantrieb wird somit die vom Verbrennungsmotor abgegebene mechanische Leistung über die elektromechanische Kopplungsvorrichtung an deren Ausgangswelle weitergegeben, wobei über die ersten und zweiten Magnetanordnungen der Kopplungsvorrichtung die Leistungsübertragung durch Zufuhr beziehungsweise Entnahme elektrischer Energie beeinflusst werden kann. Auf diese Weise wird ein sehr flexibles Instrument zur Kraftübertragung von einem Verbrennungsmotor an ein anzutreibendes Element bereit gestellt, welches zudem konstruktiv einfach und damit kostengünstig ist.

Gemäß einer ersten Anwendung des genannten Kraftantriebs kann die Ausgangswelle der elektromechanischen Kopplungsvorrichtung antreibend mit einer Ölpumpe, einer Wasserpumpe, einem Kühlergebläse, einem Klimakompressor, einem Turbolader (sog. E-Turbo) oder einem anderen anzutreibenden Gerät in einem Kraftfahrzeug verbunden sein. Die Kopplungsvorrichtung erlaubt es dabei, die genannten Geräte in energetisch effizienter Weise primär mit der mechanischen Energie des Verbrennungsmotors anzutreiben und gleichzeitig eine für den Antrieb optimale Drehzahl variabel einzustellen.

Gemäß einer anderen Anwendung der elektromechanischen Kopplungsvorrichtung in einem Kraftfahrzeug kann die Ausgangswelle der Kopplungsvorrichtung mit den Antriebsrädern des Kraftfahrzeugs verbunden sein. Dabei befindet sich in dem Verbindungsweg zu den Rädern vorzugsweise noch ein Getriebe, um eine entsprechende Übersetzung der Drehzahlen zu erlauben.

Diese Verwendung der Kopplungsvorrichtung gewährleistet zum einen die Funktion einer Lichtmaschine, mit welcher ein stehender Verbrennungsmotor gestartet werden kann und mit welcher bei laufendem Verbrennungsmotor elektrische Energie zur Aufladung einer Batterie erzeugt werden kann. Anders als eine bekannte Lichtmaschine verhält sich die erfindungsgemäße Kopplungsvorrichtung jedoch sehr viel flexibler, was die Implementation weiterer Funktionen erlaubt. Insbesondere kann durch gesteuerte Zufuhr oder Entnahme elektrischer Energie das Verhältnis der Drehzahlen von Eingangswelle und Ausgangswelle beeinflusst werden.

Vorteilhaft ist ferner, dass die Kopplungsvorrichtung gleichzeitig die Funktion einer Kupplung annehmen kann, wobei überschüssige Energie jedoch nicht in Reibungswärme umgesetzt, sondern vielmehr in nutzbare elektrische Energie umgewandelt wird.

Die elektrischen Anschlüsse der elektromechanischen Kopplungsvorrichtung sind vorteilhafterweise mit einem wiederaufladbaren elektrischen Energiespeicher verbunden, um dem Speicher wahlweise elektrische Energie zuführen oder Energie diesem entnehmen zu können. Wenn die Kopplungsvorrichtung derart eingesetzt wird, dass über die Eingangswelle mechanische Leistung zugeführt und über die Ausgangswelle mechanische Leistung entnommen wird, kann der Vorrichtung über die mit dem Speicher verbundenen Anschlüsse je nach Wunsch elektrische Energie entnommen oder zugeführt werden, wodurch die an der Ausgangswelle abgegebene mechanische Leistung beeinflusst werden kann.

Der Kraftantrieb weist vorzugsweise einen Regler für die elektromechanische Kopplungsvorrichtung auf, welcher eine Arretierung der Eingangswelle der Kopplungsvorrichtung, eine Arretierung der Ausgangswelle der Kopplungsvorrichtung und/oder eine wahlweise Entnahme oder Zufuhr elektrischer Energie über die Anschlüsse der Kopplungsvorrichtung veranlassen kann. Mit einem derartigen Regler, welcher in einem Kraftfahrzeug insbesondere mit der Motorsteuerung verbunden sein kann, kann eine intelligente und energetisch effiziente Nutzung der Leistung des Verbrennungsmotors erzielt werden.

Der Regler kann dabei insbesondere so ausgestaltet sein, dass er in mindestens einem der nachfolgend aufgezählten Regelungsmodi betrieben werden kann:

a) Motorstartmodus, bei dem durch Zufuhr elektrischer Energie zur Kopplungsvorrichtung bei arretierter Ausgangswelle die Eingangswelle in Rotation versetzt wird und dadurch den Verbrennungsmotor aktiv antreibt;

b) Kupplungsregelungsmodus, bei dem bei gegebenenfalls unterschiedlichen Drehzahlen eine Drehmomentübertragung von der Eingangswelle zur Ausgangswelle stattfindet;

c) Stromerzeugungsmodus, bei dem die über die Eingangswelle zugeführte mechanische Leistung zumindest teilweise in elektrische Energie umgewandelt wird;

d) Durchgangsmodus, bei dem nach einer eventuellen Angleichung der Drehzahlen die Eingangswelle und die Ausgangswelle mechanisch gekoppelt werden;

e) Geschwindigkeitsschubmodus, bei dem für kurze Zeit eine kontrollierte Vergrößerung der Drehzahldifferenz zwischen Eingangswelle und Ausgangswelle unter Zufuhr elektrischer Energie erfolgt, um hierdurch das Übersetzungsverhältnis des eingelegten Ganges zu erweitern;

f) Getriebesynchronisationsmodus, bei dem für kurze Zeit durch Zufuhr oder Entnahme elektrischer Energie die Drehzahl der Ausgangswelle derart verändert wird, dass die Drehzahlen von zu koppelnden Zahnrädern und/oder Wellen im nachgeschalteten Getriebe synchronisiert werden;

g) Regeneratives-Bremsen-Modus, bei dem über die Ausgangswelle zugeführte mechanische Energie in elektrische Energie umgewandelt wird;

h) Rückwärtsfahrtmodus, bei dem bei stehendem und/oder abgekoppeltem Verbrennungsmotor unter Zufuhr elektrischer Energie die Ausgangswelle derart in Rotation versetzt wird, dass bei einem eingelegten Vorwärtsgang des nachgeschalteten Getriebes eine Rückwärtsfahrt des Kraftfahrzeugs erfolgt;

i) aktiver Drehmomentdämpfungsmodus, bei dem über die Zufuhr und/oder Entnahme elektrischer Energie Drehzahlschwankungen seitens des Verbrennungsmotors oder seitens des nachfolgenden Getriebes ausgeglichen werden.

Nachfolgend wird die Erfindung mit Hilfe der Figuren beispielhaft näher erläutert. Es zeigen:

Fig. 1 eine erste Ausgestaltungsform der erfindungsgemäßen elektromechanischen Kopplungsvorrichtung;

Fig. 2 eine zweite Ausgestaltungsform der elektromechanischen Kopplungsvorrichtung;

Fig. 3 Konfigurationen von Verbrennungsmotor, Kupplung, Lichtmaschine und Getriebe nach dem Stand der Technik;

Fig. 4 ein Planetengetriebe zur mechanischen Leistungsaufspaltung nach dem Stand der Technik;

Fig. 5    die Flüsse mechanischer und elektrischer Leistung bei einer Kopplungsvorrichtung;

Fig. 6    den Kraftantrieb eines Kraftfahrzeugs mit der Kopplungsvorrichtung 10;

Fig. 7    den Übergang vom Verbrennungsmotor zum Getriebe im Kraftantrieb nach Figur 6 im Detail.

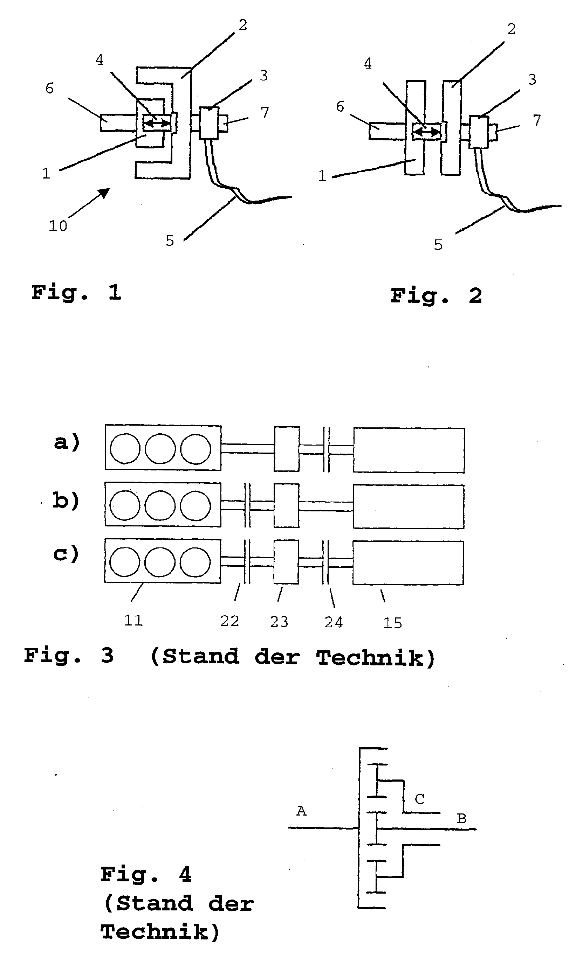

Figur 3 zeigt drei bekannte Anordnungen einer Lichtmaschine 23 im Kraftübertragungsweg zwischen einem Verbrennungsmotor 11 und einem Getriebe 15.

Bei der zuoberst dargestellten Variante a) ist eine Kupplung 24 zwischen der Lichtmaschine 23 und dem Getriebe 15 vorgesehen. Nachteilig bei dieser Anordnung ist, dass kein effizientes regeneratives Bremsen möglich ist. Beim regenerativen Bremsen wird die Lichtmaschine 23 vom Getriebe 15 angetrieben, so dass diese als Generator wirkt und dabei die zugeführte mechanische Energie in elektrische Energie umwandelt. Die Kupplung 24 in Figur 3a) muss zu diesem Zweck geschlossen werden, um eine Verbindung zwischen dem Getriebe 15 und der Lichtmaschine 23 herzustellen. Dabei wird jedoch unweigerlich auch der (im Leerlauf befindliche) Verbrennungsmotor 11 mit angetrieben, so dass ein großer Teil der vom Getriebe 15 bereitgestellten Energie in Form von Reibungsverlusten verloren geht. Weiterhin hat die Konfiguration a) aufgrund der starren Kopplung zwischen der Lichtmaschine 23 und dem Verbrennungsmotor 11 sowie der Bewegungsgrenzen des Verbrennungsmotors den Nachteil, dass die Drehrichtung der Lichtmaschine 23 nicht umgekehrt werden kann, wie es z.B. für die Realisation eines elektrisch angetriebenen Rückwärtsganges wünschenswert wäre.

Die mittlere Anordnung gemäß Figur 3b) zeigt eine Kupplung 22 zwischen dem Verbrennungsmotor 11 und der Lichtmaschine 23. Diese Anordnung hat den Nachteil, dass bei gelöster Kupplung der Verbrennungsmotor 11 nicht die Massenträgheit der Lichtmaschine 23 zur Speicherung von Rotationsenergie und damit als Ersatz für ein Schwungrad verwenden kann.

Die unterste Kombination aus Figur 3c), bei der vor und hinter der Lichtmaschine 23 jeweils eine Kupplung 22 beziehungsweise 24 angeordnet ist, erlaubt zwar das effiziente regenerative Bremsen und die Funktion der Lichtmaschine als Schwungrad, jedoch ist diese Lösung aufgrund ihrer Komplexität, Größe und der Anzahl der Komponenten sehr aufwendig und damit teuer.

Ferner ist beim regenerativen Bremsen mit den Konfigurationen b) oder c) gemäß Figur 3 jeweils ein Herunterschalten des Getriebes 15 erforderlich. Dies vermindert den Fahrkomfort, da Sprünge im Bremsmoment induziert werden.

Darüber hinaus existieren allgemeine Nachteile von Kupplungen 22, 24, wie sie bei den Konfigurationen nach Figur 3 verwendet werden. So führt das Schleifen derartiger Kupplungen bei der Drehmomentübertragung zu einem Verlust an mechanischer Energie. Aufgrund der sich verändernden Reibungscharakteristik sind derartige Kupplungen auch schwer elektronisch zu regeln, wenn sie in Verbindung mit einem Automatikgetriebe verwendet werden.

Ein anderer allgemeiner Nachteil herkömmlicher Getriebe besteht in deren wachsender Komplexität und Größe, wenn der abzudeckende Bereich der Übersetzungsverhältnisse zunehmen muss (5. oder 6. Gang bei Handschaltgetrieben, breites Übersetzungsverhältnis bei stufenlosen Getrieben), um bei Teilbelastung eine geringe Motoreffizienz zu vermeiden. In diesem Zusammenhang wäre es vorteilhaft, wenn der Schlupfbereich beim kleinsten Übersetzungsverhältnis ohne Nachteile in der Kraftstoffausnutzung und im Fahrkomfort erhöht werden könnte, da in diesem Falle das vom Getriebe bereitzustellende Übersetzungsverhältnis kleiner gewählt werden könnte.

Figur 4 zeigt eine aus dem Stand der Technik bekannte Anordnung zur Aufspaltung mechanischer Leistung. Die Anordnung besteht aus einem Planetengetriebe mit einer Eingangswelle A und zwei Ausgangswellen B und C, wobei die Eingangswelle A an ein Hohlrad, die erste Ausgangswelle B an ein Sonnenrad und die zweite Ausgangswelle C an Planetenräder, die zwischen Hohlrad und Sonnenrad angeordnet sind, gekoppelt ist. Typischerweise findet über die Eingangswelle A die Zufuhr mechanischer Leistung zum Beispiel von einem Verbrennungsmotor statt, wobei ein einstellbarer Teil dieser Leistung an die Ausgangswelle B übertragen werden soll. Der Rest der Leistung muss von der zweiten Ausgangswelle C aufgenommen werden. Zu diesem Zweck kann zum Beispiel eine zusätzliche Lichtmaschine (nicht dargestellt) mit der Ausgangswelle C verbunden werden, über welche die genannte Leistungsdifferenz entnommen beziehungsweise zugeführt werden kann. Während so zwar ein quasi unbegrenzt variables Übersetzungsverhältnis und hierdurch eine schleifende Kupplungsfunktion ermöglicht werden, hat das System jedoch den Nachteil einer großen Anzahl von Zahnradkontakten, welche wiederum zu Problemen hinsichtlich der Systemgröße, der Kosten, der Reibungsverluste, des Lärms, der Vibration und der Rauhigkeit führen.

Die vorstehend anhand der Figuren 3 und 4 erläuterten Probleme beim Stand der Technik werden mit Hilfe der in Figur 1 schematisch dargestellten elektromechanischen Kopplungsvorrichtung gelöst.

Die Kopplungsvorrichtung 10 gemäß Figur 3 weist eine Eingangswelle 6 sowie eine Ausgangswelle 7 auf. Beide Wellen 6 und 7 sind unabhängig voneinander drehbar an einem Träger 3 gelagert, wobei aus Gründen der Übersichtlichkeit in der Figur der Träger 3 nur symbolisch an der Ausgangswelle 7 angedeutet ist. Typischerweise handelt es sich bei dem Träger 3 um das Gehäuse der Vorrichtung, mit welchem diese zum Beispiel in einem Kraftfahrzeug befestigt werden kann.

Am Ende der Eingangswelle 6 ist ein Elektromagnet 1 in Form einer Rotorwicklung angeordnet. Am Ende der Ausgangswelle 7 ist ein Elektromagnet 2 in Form einer weiteren Rotorwicklung angeordnet, wobei in der Konfiguration nach Figur 1 der zweite Elektromagnet 2 den ersten Elektromagneten 1 von außen umgreift. Der Elektromagnet 1 wird daher auch als "innerer Rotor" und der Elektromagnet 2 als "äußerer Rotor" bezeichnet.

Ferner sind am Träger 3 elektrische Leitungen 5 angeordnet, welche der Energieversorgung und der Steuerung der Vorrichtung dienen. Dabei sind insbesondere die Elektromagnete 1 und 2 über am Träger 3 angeordnete Schleifkontakte (nicht dargestellt) mit entsprechenden Anschlüssen 5 verbunden.

Funktional ist der Aufbau der Kopplungsvorrichtung 10 gemäß Figur 1 symmetrisch, so dass bezüglich der Eingangswelle 6 und der Ausgangswelle 7 beziehungsweise des inneren und äußeren Rotors 1, 2 auch ohne weiteres eine spiegelbildliche Anordnung möglich ist.

Optional kann die Kopplungsvorrichtung noch eine Arretiervorrichtung 4 enthalten, über welche die Eingangswelle 6 wahlweise mechanisch mit der Ausgangswelle 7 verbunden werden kann. Bei der Herstellung der Verbindung werden dabei zunächst die Eingangswelle 6 und die Ausgangswelle 7 mit Hilfe einer geeigneten elektrischen Leistungszufuhr oder -entnahme auf gleiche Drehzahlen synchronisiert, so dass dann die Arretiervorrichtung geschlossen werden kann.

Durch eine über die Leitungen 5 geeignet gesteuerte Zufuhr elektrischer Energie zu den Elektromagneten 1 und 2 werden von diesen Elektromagneten Magnetfelder erzeugt, welche bei entsprechender Polung Kräfte beziehungsweise Drehmomente zwischen den Magnetanordnungen 1, 2 und damit zwischen den zugehörigen Wellen 6, 7 erzeugen. Über diese Kräfte lassen sich die Eingangswelle 6 und die Ausgangswelle 7 zur Kraftübertragung koppeln. Wichtig ist dabei, dass sowohl die Eingangswelle 6 als auch die Ausgangswelle 7 und damit beide Elektromagneten 1 und 2 relativ zum Träger 3 drehbar gelagert sind. Anders als bei bekannten elektrischen Maschinen mit einem Rotor und einem Stator weist die Kopplungsvorrichtung somit zwei Rotoren (und keinen Stator) auf.

Figur 2 zeigt eine alternative Ausgestaltung der Kopplungsvorrichtung. Der Unterschied zur Vorrichtung nach Figur 1 besteht darin, dass die beiden Magnetanordnungen 1 an der Eingangswelle beziehungsweise 2 an der Ausgangswelle symmetrisch aufgebaut sind, also insbesondere gleich groß sind und sich mit axialem Abstand gegenüberstehen.

Neben den beiden in den Figuren 1 und 2 schematisch gezeigten Konfigurationen sind selbstverständlich noch viele andere Konfigurationen denkbar, welche von dem Konzept zweier Rotoren Gebrauch machen.

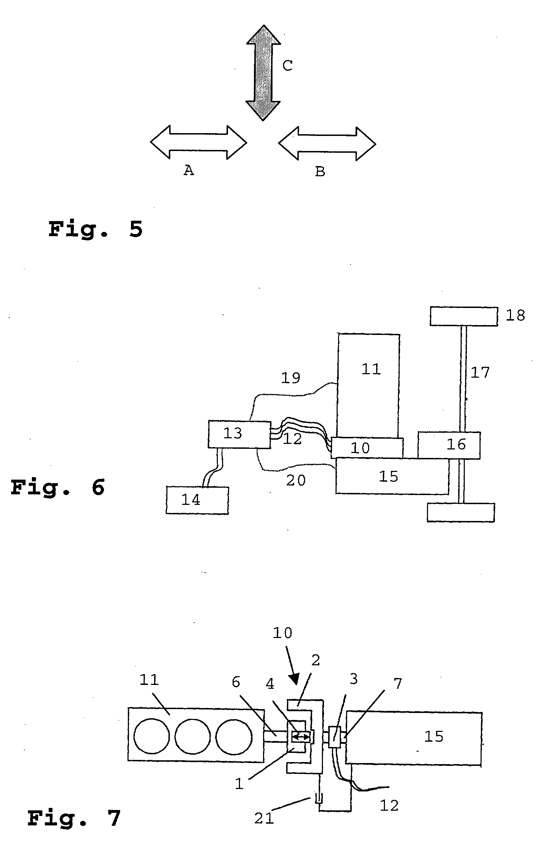

Figur 5 zeigt schematisch die Flüsse mechanischer und elektrischer Leistung bei einer erfindungsgemäßen Kopplungsvorrichtung nach den Figuren 1 oder 2. Über die Eingangswelle wird der Kopplungsvorrichtung mechanische Leistung $P_A$ (zum Beispiel von einem Verbrennungsmotor) zugeführt. Diese mechanische Leistung wird von der Kopplungsvorrichtung in mechanische Ausgangsleistung $P_B$, die über die Ausgangswelle abgegeben wird, sowie in elektrische Leistung $P_C$, die über die elektrischen Anschlüsse abgegeben oder zugeführt wird, aufgeteilt. Dabei ist die Summe der abgegebenen Leistungen $P_B$ und $P_C$ gleich der zugeführten Leistung $P_A$:

$$P_A = P_B + P_C.$$

Weiterhin gilt die Beziehung, dass die an Eingangswelle 6 und Ausgangswelle 7 wirkenden Drehmomente $T_A$ beziehungsweise $T_B$ gleich groß sein müssen:

$$T_A = T_B.$$

Dabei sind die mechanische Leistung P, das wirkende Drehmoment T und die Winkelgeschwindigkeit $\omega$ über folgende Beziehung allgemein verknüpft:

$$P = T \times \omega$$

Die Größe des von A nach B übertragenen Drehmoments kann durch eine entsprechende Regelung der Kopplungsvorrichtung festgelegt werden. Dabei kann eine Drehzahldifferenz zwischen der Eingangswelle 6 und der Ausgangswelle 7 bestehen, während das Drehmoment übertragen wird. Eine Kombination der obigen Gleichungen zeigt, dass die elektrische Leistung $P_C$ dann gegeben ist durch

$$P_C = T_A \times (\omega_A - \omega_B).$$

Wenn die Eingangswelle 6 die Ausgangswelle 7 antreibt und gleichzeitig die Kopplungsvorrichtung so geregelt wird, dass ein Schlupf zwischen den Wellen erlaubt wird, rotiert die Ausgangswelle 7 mit geringerer Drehzahl $\omega_B$, so dass die Kopplungsvorrichtung elektrische Leistung $P_C$ erzeugt. Wenn die Vorrichtung dagegen so geregelt wird, dass elektrische Energie in das System eingespeist wird, ist die Drehzahl $\omega_B$ der Ausgangswelle 7 höher als die der Eingangswelle 6. Die elektromechanische Kopplungsvorrichtung kann demnach so geregelt werden, dass ein quasi unendlich variables Drehzahlverhältnis i eingestellt werden kann:

$$i = \omega_B/\omega_A \text{ mit } -\infty < i < \infty.$$

Mit einer elektromechanischen Kopplungsvorrichtung 10 kann eine bessere Leistungsaufspaltung erreicht werden, als sie mit einem mechanischen Planetengetriebe gemäß Figur 4 möglich ist. Anders als das Planetengetriebe ist nämlich der Aufbau der Kopplungsvorrichtung einfacher und kompakter, wobei gleichzeitig Energieverluste aufgrund mechanischer Reibung minimiert werden.

Für viele Anwendungen bzw. Geräte insbesondere im Kraftfahrzeugbereich ist in Hinblick auf die Effizienz ein direkter mechanischer Antrieb vorteilhaft. Andererseits benötigen manche Geräte jedoch eine Betriebsdrehzahl, die idealerweise von der Drehzahl der antreibenden Quelle verschieden ist. In diesen Fällen kann die elektromechanische Kopplungsvorrichtung 10 mit Vorteil eingesetzt werden, da sie eine kleine, kompakte Anordnung ermöglicht, bei der die Drehzahl der Ausgangswelle unabhängig von der Drehzahl der Eingangswelle eingestellt werden kann. Eine derartige Konfiguration hat gegenüber einem vollständig elektrischen Antrieb den Vorteil, dass die Antriebsleistung teilweise mechanisch zur Verfügung gestellt wird und daher elektrische Umwandlungsverluste minimiert sind. Insbesondere kann eine Kühlwasserpumpe, ein Kühlergebläse, ein Klimakompressor oder ein Turbolader eines Verbrennungsmotors vorteilhaft mit einer Kopplungsvorrichtung 10 betrieben werden, deren Eingangswelle vom Verbrennungsmotor angetrieben wird.

Eine weitere wichtige Anwendungsmöglichkeit für die Kopplungsvorrichtung 10 in einem Kraftfahrzeug wird nachfolgend anhand der Figuren 6 und 7 beschrieben. Figur 6 zeigt schematisch die für die Erfindung wesentlichen Komponenten des Kraftantriebs eines Kraftfahrzeugs. Primäre Quelle des Kraftantriebes ist der Verbrennungsmotor 11, welcher über die erfindungsgemäße Kopplungsvorrichtung 10 ein Getriebe 15, ein Achsgetriebe 16 sowie die Radachsen 17 und die Räder 18 des Kraftfahrzeugs antreibt. Die Kopplungsvorrichtung 10 ist dabei über Leitungen 12 zur Energieübertragung und zur Kommunikation mit der Leistungselektronik bzw. dem Regler 13 verbunden. Der Regler 13 steht seinerseits über Leitungen mit dem Speicher 14 für elektrische Energie (zum Beispiel Batterie, Superkondensator) in Verbindung. Weiterhin ist der Regler 13 über Steuerleitungen 19 und 20 mit dem Verbrennungsmotor 11 beziehungsweise mit dem Getriebe 15 verbunden.

Figur 7 zeigt den Kraftübertragungsweg vom Verbrennungsmotor 11 zum Getriebe 15 detaillierter. Zwischen dem Verbrennungsmotor 11 und dem Getriebe 15 ist eine Kopplungsvorrichtung 10 der in Figur 1 erläuterten Art mit einem inneren Rotor 1 und einem äußeren Rotor 2 angeordnet. Die Eingangswelle 6 der Vorrichtung 10 wird vom Verbrennungsmotor 11 angetrieben. Die Ausgangswelle 7 der Vorrichtung 10 treibt wiederum das Getriebe 15 an. Ferner ist die anhand von Figur 1 bereits beschriebene Arretiervorrichtung 4 zur optionalen Verbindung von Eingangswelle 6 und Ausgangswelle 7 zu erkennen.

Daneben ist noch eine weitere optionale Arretiervorrichtung 21 vorgesehen, mit deren Hilfe die Ausgangswelle 7 beziehungsweise der äußere Rotor 2 drehfest arretiert werden kann. Selbstverständlich kann die in Figur 7 dargestellte Anordnung von innerem und äußerem Rotor auch spiegelbildlich bezüglich Eingangswelle 6 und Ausgangswelle 7 ausgeführt werden.

Die in Figur 7 dargestellte Anordnung vereinigt die Funktionen von drei Subsystemen aus bekannten Anordnungen (vgl. Figur 3), nämlich die der motornahen Kupplung, die der Lichtmaschine und die der getriebenahen Kupplung. Damit lässt sich ein breiter Funktionsumfang bei gleichzeitig kompaktem und kostengünstigem Aufbau erzielen. Mit der Kopplungsvorrichtung 10 kann eine Drehmomentübertragung zwischen Eingangswelle 6 und Ausgangswelle 7 vorgenommen werden, bei der Drehzahldifferenzen erlaubt sind. Auf diese Weise kann ein Teil der überschüssigen Energie in elektrische Energie umgewandelt werden, die zur Befriedigung des zunehmenden Energiebedarfs von im Fahrzeug befindlichen elektrischen Anwendungen - einschließlich eines elektrischen Fahrzeugantriebes - verwendet werden kann.

Darüber hinaus kann das in den Figuren 6 und 7 dargestellte System in verschiedenen Modi betrieben werden, welche vorteilhafte Lösungen für die Nachteile bekannter Systeme bereitstellen. Diese Modi werden nachfolgend erläutert.

Modus a): Motorstart

Der Verbrennungsmotor 11 kann durch die Kopplungsvorrichtung 10 gestartet (angelassen) werden, wenn entweder die Ausgangswelle 7 der Kopplungsvorrichtung 10 (das heißt die Eingangswelle des Getriebes 15) arretiert wird, oder wenn ein Gang im Getriebe 15 eingelegt und die Ausgangswelle des Getriebes arretiert wird. Letzteres kann geschehen, indem die Bremsen des Kraftfahrzeugs betätigt werden, was insbesondere elektronisch kontrolliert werden kann (zum Beispiel unter Verwendung der Funktion der Rückrollsperre).

Modus b): Kupplungsregelung

Die Kopplungsvorrichtung 10 kann derart geregelt werden, dass Drehmomente übertragen werden und gleichzeitig eine Drehzahldifferenz zwischen dem Motor und dem Getriebe erlaubt wird. Während eines derartigen Schlupfes der Kupplung wird elektrische Leistung erzeugt. Da mechanische Kupplungsreibung mit entsprechenden Verlusten vermieden wird, kann das kleinste Gangverhältnis des Getriebes 15 kleiner gewählt werden. Hierdurch kann ggf. auf die Implementation eines 5. oder 6. Ganges in einem Handschaltgetriebe verzichtet bzw. der Übersetzungsverhältnisbereich in einem stufenlosen Getriebe reduziert werden. Dies ist für die gesamte Effizienz des Systems, die Komplexität, die Größe und die Kosten vorteilhaft.

Modus c): Elektrische Leistungserzeugung

Beim Antreiben der Räder des Kraftfahrzeugs kann die Drehzahldifferenz zwischen der Motorwelle und der Getriebewelle durch die Leistungselektronik der Kopplungsvorrichtung 10 kontrolliert werden. Durch Auswahl des optimalen Getriebeganges ist es möglich, die Drehzahldifferenz und das Drehmoment so zu wählen, dass die elektrische Effizienz für die geforderte elektrische Ladeleistung optimal ist (zum Beispiel durch optimierte Auswahl eines Ganges oder durch Verwendung eines stufenlosen Getriebes).

Modus d): Arretierung

Die optional vorgesehene Arretiervorrichtung 4 kann aktiviert werden, wenn keine Erzeugung elektrischer Leistung notwendig ist. In diesem Falle kann die Kopplungsvorrichtung 10 zunächst die Eingangs- und Ausgangsdrehzahlen synchronisieren, wobei nach erfolgter Synchronisation die Arretiervorrichtung 4 die Eingangswelle 6 und die Ausgangswelle 7 mechanisch koppelt.

Modus e): Geschwindigkeitsschub

In Abhängigkeit von der gespeicherten elektrischen Energie und von Überladungskapazitäten kann die elektromechanische Kopplungsvorrichtung 10 für kurze Zeitdauern so geregelt werden, dass sie die Drehzahldifferenz zwischen der Eingangswelle 6 und der Ausgangswelle 7 in positiver oder negativer Richtung erhöht. Hierdurch wird der Drehzahlbereich für ein bestimmtes Gangverhältnis ausgedehnt. Auf diese Weise kann auch die Anzahl der Schaltvorgänge reduziert werden, indem zum Beispiel ein vorübergehendes Herauf- oder Herunterschalten vermieden wird. Dies erhöht den Fahrkomfort des Kraftfahrzeugs erheblich.

Modus f): Gangsynchronisation

In Abhängigkeit von der gespeicherten elektrischen Energie und von Überladungskapazitäten kann die elektromechanische Kopplungsvorrichtung 10 für kurze Zeitdauern die Drehzahldifferenz zwischen Eingangswelle 6 und Ausgangswelle 7 regeln, was helfen kann, während Schaltvorgängen im Getriebe 15 eine Synchronisation von Zahnrädern zu erreichen. Die notwendigen Informationen über den Zustand des Getriebes 15 erhält der Regler 13 dabei über entsprechende Steuerungsleitungen 20 (Figur 6). Auf diese Weise kann eine Vereinfachung der Steuerung automatischer Schaltvorgänge in Getrieben erzielt werden.

Modus g): Regeneratives Bremsen

Während Bremsvorgängen oder Übergängen in den Leerlauf (coast-down) kann der Verbrennungsmotor verzögert oder vollständig ausgeschaltet werden. Die elektromechanische Kopplungsvorrichtung 10 kann dann als Generator betrieben werden, um Bremsenergie wiederzugewinnen, welche ihr vom Getriebe 15 über die Ausgangswelle 7 zugeführt wird. Dabei ist es nicht erforderlich, während der Verzögerung des Fahrzeuges herauf beziehungsweise oder herunter zu schalten. Dies vereinfacht die Kontrolle des Kraftantriebes und verbessert den Fahrkomfort erheblich, da keine Aussetzer in der Bremskraft auftreten.

Modus h): Rückwärtsfahrt

Wenn der Verbrennungsmotor 11 abgestellt und arretiert ist, kann der Lauf der Kopplungsvorrichtung 10 für einen rückwärts gerichteten Antrieb des Kraftfahrzeugs umgekehrt werden, wobei im Getriebe 15 der erste Vorwärtsgang eingelegt wird. In diesem Falle müssen keine Zahnradkombinationen für eine Drehrichtungsumkehr im Getriebe 15 vorgesehen werden.

Modus i): Aktive Drehmomentdämpfung

Schließlich kann die Drehzahldifferenz oder das Drehmoment mit der elektromechanischen Kopplungsvorrichtung 10 in schneller Art und Weise so geregelt werden, dass Drehzahlfluktuationen sowohl vom Motor als auch vom Getriebe gedämpft werden. Auch hierdurch wird zur Verbesserung des Fahrkomforts beigetragen.

**Patentansprüche**

1. Elektromechanische Kopplungsvorrichtung (10), welche sowohl als Elektromotor als auch als Generator betreibbar ist, enthaltend:

   - einen Träger (3) mit Anschlüssen (5; 12) zur Zufuhr elektrischer Energie;
   - eine relativ zum Träger drehbar gelagerte Eingangswelle (6) mit mindestens einer an dieser angeordneten ersten Magnetanordnung (1); und
   - mindestens einer zweiten Magnetanordnung (2), gegenüber der die Eingangswelle drehbar ist und die zur Erzeugung eines relativen Drehmomentes mit der ersten Magnetanordnung (1) zusammenwirkt,

   wobei die erste Magnetanordnung und/oder die zweite Magnetanordnung als mit den Anschlüssen (5; 12) verbundener Elektromagnet ausgebildet ist,

**dadurch gekennzeichnet,**
**dass** die zweite Magnetanordnung (2) an einer relativ zum Träger (3) drehbar gelagerten Ausgangswelle (7) angeordnet ist.

2. Kopplungsvorrichtung nach Anspruch 1,
**dadurch gekennzeichnet, dass** beide Magnetanordnungen (1, 2) mit den Anschlüssen (5; 12) verbundene Elektromagneten sind.

3. Kopplungsvorrichtung nach Anspruch 1 oder 2,
**dadurch gekennzeichnet, dass** diese eine erste Arretiervorrichtung (4) zur mechanischen Kopplung von Eingangswelle (6) und Ausgangswelle (7) aufweist.

4. Kopplungsvorrichtung nach mindestens einem der Ansprüche 1 bis 3
**dadurch gekennzeichnet, dass** diese eine zweite Arretiervorrichtung (21) zur mechanischen Kopplung der Eingangswelle (6) und/oder der Ausgangswelle (7) mit dem Träger (3) aufweist.

5. Kraftantrieb enthaltend einen Verbrennungsmotor, insbesondere für ein Kraftfahrzeug,
**dadurch gekennzeichnet, dass** die Ausgangswelle des Verbrennungsmotors (11) mit der Eingangswelle (6) einer elektromechanischen Kopplungsvorrichtung (10) nach einem der Ansprüche 1 bis 4 gekoppelt ist.

6. Kraftantrieb nach Anspruch 5,
**dadurch gekennzeichnet, dass** die Ausgangswelle (7) der elektromechanischen Kopplungsvorrichtung (10) antreibend mit einer Ölpumpe und/oder einer Wasserpumpe und/oder einem Kühlergebläse und/oder einem Klimakompressor und/oder einem Turbolader in einem Kraftfahrzeug verbunden ist.

7. Kraftantrieb nach einem der Ansprüche 5 oder 6,
**dadurch gekennzeichnet, dass** die Ausgangswelle (7) der elektromechanischen Kopplungsvorrichtung (10) vorzugsweise über ein Getriebe (15, 16) mit den Antriebsrädern (18) eines Kraftfahrzeugs verbunden ist.

8. Kraftantrieb nach mindestens einem der Ansprüche 5 bis 7,
**dadurch gekennzeichnet, dass** die elektrischen Anschlüsse (12) der elektromechanischen Kopplungsvorrichtung (10) mit einem wiederaufladbaren elektrischen Energiespeicher (14) verbunden sind, um diesem wahlweise elektrische Energie zuführen oder entnehmen zu können.

9. Kraftantrieb nach mindestens einem der Ansprüche 5 bis 8,
**dadurch gekennzeichnet, dass** dieser einen Regler (13) für die elektromechanische Kopplungsvorrichtung (10) aufweist, mit dem eine Arretierung der Eingangswelle (6) der Kopplungsvorrichtung, eine Arretierung der Ausgangswelle (7) der Kopplungsvorrichtung und/oder eine wahlweise Entnahme oder Zufuhr elektrischer Energie über die Anschlüsse (12) der Kopplungsvorrichtung vorgenommen werden kann.

10. Kraftantrieb nach Anspruch 9,
**dadurch gekennzeichnet, dass** der Regler (13) derart ausgestaltet ist, dass er in mindestens einem der folgenden Regelungsmodi betrieben werden kann:

a) Motorstartmodus, bei dem durch Zufuhr elektrischer Energie zur Kopplungsvorrichtung bei arretierter Ausgangswelle (7) die Eingangswelle (6) den Verbrennungsmotor (11) antreibend in Rotation versetzt;

b) Kupplungsregelungsmodus, bei dem eine Drehmomentübertragung von der Eingangswelle (6) zur Ausgangswelle (7) stattfindet;

c) Stromerzeugungsmodus, bei dem die über die Eingangswelle (6) zugeführte mechanische Leistung zumindest teilweise in elektrische Energie umgewandelt wird;

d) Durchgangsmodus, bei dem nach einer eventuellen Angleichung der Drehzahlen die Eingangswelle (6) und die Ausgangswelle (7) mechanisch gekoppelt sind;

e) Geschwindigkeitsschubmodus, bei dem für kurze Zeiten eine kontrollierte Vergrößerung der Drehzahldifferenz zwischen Eingangswelle (6) und Ausgangswelle (7) unter Zufuhr elektrischer Energie zur Kopplungsvorrichtung erfolgt, um hierdurch das Übersetzungsverhältnis des im Getriebe eingelegten Ganges zu erweitern;

f) Getriebesynchronisationsmodus, bei dem für kurze Zeiten durch Zufuhr oder Entnahme elektrischer Energie die Drehzahl der Ausgangswelle (7) derart verändert wird, dass die Drehzahlen von zu koppelnden Zahnrädern im nachgeschalteten Getriebe synchronisiert werden;

g) Regeneratives-Bremsen-Modus, bei dem über die Ausgangswelle (7) zugeführte mechanische Energie in elektrische Energie umgewandelt wird;

h) Rückwärtsfahrtmodus, bei dem bei stehendem und/oder abgekoppeltem Verbrennungsmotor (11) unter Zufuhr elektrischer Energie zur Kopplungsvorrichtung die Ausgangswelle (7) so in Rotation versetzt wird, dass bei einem eingelegten Vorwärtsgang des nachgeschalteten Getriebes eine Rückwärtsfahrt des Kraftfahrzeugs erfolgt;

i) Drehmomentdämpfungsmodus, bei dem über die Zufuhr und/oder Entnahme elektrischer Energie Drehzahlschwankungen seitens des Verbrennungsmotors (11) oder seitens des nachfolgenden Getriebes ausgeglichen werden.

Fig. 1

Fig. 2

Fig. 3   (Stand der Technik)

Fig. 4
(Stand der
Technik)

C

A          B

# Fig. 5

19

11

13    12    10    16

14    20    15    18    17

# Fig. 6

10

11    6  4    2    3    7

15

1    12

21

# Fig. 7

## EUROPÄISCHER RECHERCHENBERICHT

**Europäisches Patentamt**

**Nummer der Anmeldung**

EP 01 10 6991

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 97 09191 A (SADARANGANI, BACKSTROM, OSTLUND) 13. März 1997 (1997-03-13) | 1-5,8-10 | H02K51/00<br>B60K6/04 |
| Y | * Seite 5, Zeile 16 - Zeile 17; Abbildungen 4,6,7 *<br>* Seite 5, Zeile 22 - Zeile 24 *<br>* Seite 6, Zeile 4 - Seite 7, Zeile 30 *<br>* Seite 8, Zeile 1 - Zeile 25 *<br>--- | 6 | B60K41/00 |
| X | WO 97 08457 A (HOFFMANN BERNHARD ;ZEYEN KLAUS PETER (DE); PELS THOMAS (DE); GRUEN) 6. März 1997 (1997-03-06)<br>* Seite 47, Zeile 12 - Seite 49, Zeile 15; Abbildung 8 *<br>--- | 1,2,4,5, 7-10 | |
| X | EP 0 806 315 A (SI-HU-TOWN) 12. November 1997 (1997-11-12)<br>* Spalte 7, Zeile 6 - Zeile 11; Abbildung 1; Tabelle 1 *<br>--- | 1,3-5, 7-10 | |
| Y | EP 0 908 343 A (AISAN AW CO) 14. April 1999 (1999-04-14)<br>* Spalte 1, Zeile 47 - Zeile 58 *<br>* Spalte 2, Zeile 48 - Zeile 58; Abbildung 1 *<br>----- | 6 | |

**RECHERCHIERTE SACHGEBIETE (Int.Cl.7)**

H02K
B60K

Der vorliegende Recherchenbericht wurde für alle Patentansprüche erstellt

| Recherchenort | Abschlußdatum der Recherche | Prüfer |
|---|---|---|
| BERLIN | 25. Juli 2001 | Roy, C |

## ANHANG ZUM EUROPÄISCHEN RECHERCHENBERICHT
## ÜBER DIE EUROPÄISCHE PATENTANMELDUNG NR.

EP 01 10 6991

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-07-2001

| Im Recherchenbericht angeführtes Patentdokument | Datum der Veröffentlichung | Mitglied(er) der Patentfamilie | Datum der Veröffentlichung |
|---|---|---|---|
| WO 9709191 A | 13-03-1997 | SE 505214 C<br>AU 6949196 A<br>EP 0848671 A<br>SE 9503043 A<br>US 6098735 A | 14-07-1997<br>27-03-1997<br>24-06-1998<br>05-03-1997<br>08-08-2000 |
| WO 9708457 A | 06-03-1997 | DE 19532135 A<br>WO 9708008 A<br>WO 9708456 A<br>WO 9708439 A<br>WO 9708440 A<br>WO 9708477 A<br>DE 59603588 D<br>DE 59603636 D<br>DE 59604794 D<br>DE 59606106 D<br>EP 0846065 A<br>EP 0876554 A<br>EP 0847487 A<br>EP 0847490 A<br>EP 0845088 A<br>EP 0847494 A<br>JP 11511526 T<br>US 6202776 B<br>US 6199650 B<br>US 6138629 A | 06-03-1997<br>06-03-1997<br>06-03-1997<br>06-03-1997<br>06-03-1997<br>06-03-1997<br>09-12-1999<br>16-12-1999<br>27-04-2000<br>07-12-2000<br>10-06-1998<br>11-11-1998<br>17-06-1998<br>17-06-1998<br>03-06-1998<br>17-06-1998<br>05-10-1999<br>20-03-2001<br>13-03-2001<br>31-10-2000 |
| EP 806315 A | 12-11-1997 | AU 727772 B<br>US 5562566 A<br>AU 5219596 A<br>DE 69611823 D<br>DE 69611823 T | 21-12-2000<br>08-10-1996<br>13-11-1997<br>29-03-2001<br>07-06-2001 |
| EP 908343 A | 14-04-1999 | JP 11107798 A | 20-04-1999 |

EPO FORM P0461

Für nähere Einzelheiten zu diesem Anhang : siehe Amtsblatt des Europäischen Patentamts, Nr.12/82